# EUROPÄISCHE PATENTSCHRIFT

(11) **EP 0 827 553 B1**
(45) Veröffentlichungstag und Bekanntmachung des Hinweises auf die Patenterteilung: **27.11.2002**
(21) Anmeldenummer: 96915014.3
(22) Anmeldetag: 03.05.1996
(51) Int. Cl.: C14C 9/00, A01N 31/08

(54) **WIRKSTOFFKOMBINATIONEN**
COMBINATIONS OF ACTIVE SUBSTANCES
ASSOCIATIONS DE SUBSTANCES ACTIVES

(30) Priorität: 16.05.1995 DE 19517840
(43) Veröffentlichungstag der Anmeldung: 11.03.1998
(73) Patentinhaber: BAYER AG, 51368 Leverkusen (DE)
(72) Erfinder: ROTHER, Heinz-Joachim, D-47803 Krefeld (DE); KUGLER, Martin, D-42799 Leichlingen (DE); REHBEIN, Hartmut, D-47802 Krefeld (DE)
(86) Internationale Anmeldenummer: EP9601845
(87) Internationale Veröffentlichungsnummer: WO96036739

(56) Entgegenhaltungen:
- EP-A- 0 341 954
- EP-A- 0 366 071
- EP-A- 0 409 500
- US-A- 2 904 392
- DATABASE WPI Week 9516 Derwent Publications Ltd., London, GB; AN 95118959 XP002012461 & JP,A,07 041 800 (FUJIMOTO) , 10.Februar 1995

## Beschreibung

Die vorliegende Anmeldung betrifft die Verwendung von Wirkstoffkombinationen aus mindestens einem Triazol, Benzimidazol, Imidazol und/oder Morpholinderivat und mindestens einer phenolischen Verbindung zur Konservierung von tierischen Häuten.

Bekannt ist, dass Phenolderivate sowie Gemische oder Formulierungen hiervon als Materialschutzmittel bei der Lederherstellung verwendet werden können. Es hat sich aber gezeigt, dass diese Verbindungen allein oder in Kombination eingesetzt, nach einiger Zeit keinen ausreichenden Schutz gegen Mikrobenbefall bei lagernden Häuten und Leder bieten.

Aus dem Abstract gemäß Database WPI, AN 95-11 89 59 zu JP-A 7 041 800 sind Mittel bekannt, die eine Mischung aus aromatischen Imidazolderivaten und phenolischen Verbindungen enthalten und zum Beschichten von Leder eingesetzt werden.

EP-A 366 071 beschreibt Mischungen von bioziden Wirkstoffen mit wasser- und ölabweisenden Substanzen die u.a. zum Schutz von Leder eingesetzt werden können, wobei als Wirkstoffe auch Benzimidazole und Phenole genannt sind.

Es wurde nun überraschenderweise gefunden, dass Benzimidazole, Imidazole, Triazole, und/oder Morpholinderivate in Kombination mit phenolischen Verbindungen einen ausgezeichneten und dauerhaften Schutz der tierischen Häute während der Herstellung und deren Lagerung ermöglichen.

Gegenstand der Anmeldung ist daher die Verwendung einer Mischung von mindestens einem Triazol aus der Reihe Amitrole, Azocyclotin, Azaconazole, Epoxiconazole (BAS 480F), Bitertanole, Cyproconazole, Difenoconazole, Fenbuconazole, Fenchlorazole, Fenethanol, Fluquinconazole, Flusilazole, Flutriafol, Hexaconazole, Imibenconazole, Isozofos, Myclobutanil, Metconazole, Epoxyconazole, Paclobutrazole, Penconazole, Propiconazole, cis-1-(4-chlorphenyl)-2-(1H-1,2,4-triazol-1-yl)-cycloheptanol, Tebuconazole, 2-(1-tert.-Butyl)-1-(2-chlorphenyl)-3-(1,2,4-triazol-1-yl)-propan-2-ol, Tetraconazole, Triadimefon, Triadimenol, Triapenthenole, Triflumizole, Triticonazole, Uniconazole sowie deren Metallsalze und Säureaddukte und/oder mindestens einem Benzimidazol aus der Reihe Benzimidazolylcarbaminsäuremethylester, Benomyl, Fuberidazol, Thiabendazol sowie deren Metallsalze und Säureaddukte, und/oder mindestens einem Imidazol aus der Reihe Imazolil, Pefurazoate, Prochloraz, Triflumizole, Bifonazole, Canesten®, Fluotimazole, Miconazole, Econazole, Isoconazole, Sulconazole sowie deren Metallsalze und Säureaddukte und/oder mindestens einem Morpholinderivat aus der Reihe Tridemorph, Aldimorph, Fenpropimorph, Amorolfine und Dodemorph mit mindestens einer phenolischen Verbindung aus der Reihe Tribromphenol, Tetrachlorphenol, Nitrophenol, 3-Methyl-4-chlorphenol, 3,5-Dimethyl-4-chlorphenol, Phenoxyethanol, Dichlorophen, o-Phenylphenol, m-Phenylphenol, p-Phenylphenol, 2-Benzyl-4-chlorphenol sowie deren Alkali- und Erdalkalisalze sowie deren Gemische bei der Lederherstellung zum Schutz von tierischen Häuten vor mikrobiellem Befall, wobei die Mischungsverhältnisse des phenolischen Bestandteils zu den weiteren Wirkstoffen 5 bis 200 Gew.-Teile zu einem Gew.-Teil betragen.

Bevorzugt werden Kombinationen von 3,5-Dimethyl-4-chlorphenol, 2-Benzyl-4-chlorphenol, p-Chlor-m-kresol (CMK) und/oder o-Phenylphenol (OPP) als phenolische Bestandteile und Tebuconazole, Propiconazole, Azaconazole, Cyproconazole, Hexaconazole, Epoxyconazole und/oder Imazalil als weitere Komponente.

Bevorzugt werden ferner Kombinationen der oben genannten bevorzugten Phenole mit Benzimidazolen wie BCM, Benomyl und/oder Aldimorph bzw. Tridemorph.

Besonders bevorzugt sind Kombinationen von CMK und/oder OPP mit Tebuconazole und/oder Propiconazole.

Bevorzugte Kombinationen sind des weiteren Kombinationen von OPP und/oder CMK mit BCM.

Insbesondere wird eine Mischung enthaltend CMK, OPP und Tebuconazole verwendet.

Die Mischungsverhältnisse des phenolischen Bestandteils zu den weiteren Wirkstoffen beträgt vorzugsweise 10 bis 100, insbesondere 12 bis 50, Gew.-Teile zu 1 Gew.-Teil.

Das Verhältnis der phenolischen Verbindungen untereinander kann breit variiert werden und liegt bei einer Mischung von OPP und CMK vorzugsweise bei 1:1 bis 1:5.

Die obengenannten Mischungen der Wirkstoffe werden im allgemeinen in Form von Formulierungen eingesetzt. Dabei beträgt die Anwendungskonzentration vorzugsweise 0,1 bis 1 % Wirkstoffmischung bezogen auf die zu schützenden Häute.

Die bei der Formulierung entstehenden Mittel enthalten die Wirkstoffinischung vorzugsweise zu 10 bis 50 %. Als weitere Bestandteile enthalten die Mittel 10 bis 30 % Alkali- und/oder Erdalkalihydroxide; 1 bis 20 % ionische und/oder nicht- ionische Emulgatoren; 5 bis 30 % organische Lösemittel wie insbesondere Glykole, Ketone, Glykolether, Alkohole wie Ethanol, Methanol, 1,2-Propandiol, n-Propanol, 2-Propanol sowie 0-0,5 % Aroma- und Duftstoffe. Der Rest zu 100 % ist Wasser.

Die Wirkstoffmischungen und die daraus herstellbaren Mittel werden erfindungsgemäß bei der Lederherstellung zum Schutz von tierischen Häuten gegen Angriff und Beschädigung durch Mikroorganismen verwendet Dabei ist von besonderem Interesse, dass Vertreter der Species Aspergillus niger, Aspergillus repens, Hormoconis resinae, Penicillium glaucum und Trichoderma viride, Penicillium-Arten wie P. citrinum oder P. glaucum, Paecilomjces variotii, Cladosporium-Arten wie Mucor-Arten wie Mucor mucedo, Rhizopus-Arten wie Rhizopus-orizae, Rhizopus rouxii vollständig und dauerhaft unterdrückt werden.

Die nachfolgenden Beispiele dienen zur Erläuterung der Erfindung und sind nicht auf diese beschränkt.

### Beispiel 1

Agarplatten werden mit Konidien der Species Aspergillus niger, Aspergillus repens, Penicillium glaucum, Trichoderma viride und Hormoconis resinae kontaminiert. Anschließend werden mit Mischung I und Mischung II behandelte feuchte Chromleder (wet blue) aufgelegt und 28 Tage bei 95 % relativer Luftfeuchtigkeit und 20 bis 30°C inkubiert.

| Mischung I | Mischung II |
|---|---|
| 30 Gew.-Teile p-Chlor-m-kresol | 23 Gew.-Teile p-Chlor-m-kresol |
| 13 Gew.-Teile o-Phenylphenol | 10 Gew.-Teile o-Phenylphenol |
| | 2 Gew.-Teile Tebuconazole |

Die mit der Mischung I konservierten wet blues zeigen schon nach 10 Tagen Inkubationszeit Schimmelwachstum auf den Prüfkörpern. Im Fall von Mischung II wird nach 28 Tagen Inkubationszeit kein Befall festgestellt.

## Patentansprüche

1. Verwendung einer Mischung von mindestens einem Triazol aus der Reihe Amitrole, Azocyclotin, Azaconazole, Epoxiconazole (BAS 480F), Bitertanole, Cyproconazole, Difenoconazole, Fenbuconazole, Fenchlorazole, Fenethanol, Fluquinconazole, Flusilazole, Flutriafol, Hexaconazole, Imibenconazole, Isozofos, Myclobutanil, Metconazole, Epoxyconazole, Paclobutrazole, Penconazole, Propiconazole, cis-1-(4-chlorphenyl)-2-(1H-1,2,4-triazol-1-yl)-cycloheptanol, Tebuconazole, 2-(1-tert.-Butyl)-1-(2-chlorphenyl)-3-(1,2,4-triazol-1-yl)-propan-2-ol, Tetraconazole, Triadimefon, Triadimenol, Triapenthenole, Triflumizole, Triticonazole, Uniconazole sowie deren Metallsalze und Säureaddukte und/oder mindestens einem Benzimidazol aus der Reihe Benzimidazolylcarbaminsäuremethylester, Benomyl, Fuberidazol, Thiabendazol sowie deren Metallsalze und Säureaddukte, und/oder mindestens einem Imidazol aus der Reihe Imazolil, Pefurazoate, Prochloraz, Triflumizole, Bifonazole, Canesten®, Fluotimazole, Miconazole, Econazole, Isoconazole, Sulconazole sowie deren Metallsalze und Säureaddukte und/oder mindestens einem Morpholinderivat aus der Reihe Tridemorph, Aldimorph, Fenpropimorph, Amorolfine und Dodemorph mit mindestens einer phenolischen Verbindung aus der Reihe Tribromphenol, Tetrachlorphenol, Nitrophenol, 3-Methyl-4-chlorphenol, 3,5-Dimethyl-4-chlorphenol, Phenoxyethanol, Dichlorophen, o-Phenylphenol, m-Phenylphenol, p-Phenylphenol, 2-Benzyl-4-chlorphenol sowie deren Alkaliund Erdalkalisalze sowie deren Gemische bei der Lederherstellung zum Schutz von tierischen Häuten vor mikrobiellem Befall, wobei die Mischungsverhältnisse des phenolischen Bestandteils zu den weiteren Wirkstoffen 5 bis 200 Gew.-Teile zu einem Gew.-Teil betragen.

2. Verwendung gemäß Anspruch 1, **dadurch gekennzeichnet, dass** Kombinationen von 3,5-Dimethyl-4-chlorphenol, 2-Benzyl-4-chlorphenol, p-Chlor-m-kresol (CMK) und/oder o-Phenylphenol (OPP) als phenolische Bestandteile und Tebuconazole, Propiconazole, Azaconazole, Hexaconazole, Epoxyconazole, Imazalil, Benzimidazolylcarbaminsäuremethylester (BCM), Benomyl, Aldimorph und/oder Tridemorph als weitere Komponente verwendet werden.

3. Verwendung gemäß Anspruch 1, **dadurch gekennzeichnet, dass** Kombinationen von p-Chlor-m-kresol (CMK) und/oder o-Phenylphenol (OPP) mit Tebuconazole und/oder Propiconazole eingesetzt werden.

4. Verwendung gemäß Anspruch 1, **dadurch gekennzeichnet, dass** eine Mischung enthaltend p-Chlor-m-kresol (CMK), o-Phenylphenol (OPP) und Tebuconazole verwendet wird.

5. Verwendung gemäß Anspruch 1, **dadurch gekennzeichnet, dass** eine Kombination von p-Chlor-m-kresol (CMK) und/oder o-Phenylphenol (OPP) mit Benzimidazolylcarbaminsäuremethylester (BCM) verwendet wird.

6. Mikrobizide Mittel enthaltend eine Mischung wie in einem der Ansprüche 1 bis 5 definiert sowie die für Mittel zum Schutz von tierischen Häuten, üblichen Bestandteile.

7. Verfahren zum Schützen von tierischen Häuten vor mikrobiellem Befall bei der Lederherstellung, **dadurch gekennzeichnet, dass** man die Häute mit einem Mittel nach Anspruch 6 behandelt.

8. Verwendung einer Mischung wie in den Ansprüchen 1 bis 5 definiert, zur Herstellung von Mitteln zum Schutz von tierischen Häuten vor mikrobiellem Befall bei der Lederherstellung.

## Claims

1. Use of a mixture of at least one triazole from the group consisting of amitrole, azocyclotin, azaconazole, epoxiconazole (BAS 480F), bitertanole, cyproconazole, difenoconazole, fenbuconazole, fenchlorazole, fenethanol, fluqinconazole, flusilazole, flutriafol, hexaconazole, imibenconazole, isozofos, myclobutanil, metconazole, epoxyconazole, paclobutrazole, penconazole, propiconazole, cis-1-(4-chlorophenyl)-2-(1H-1,2,4-triazol-1-yl)cycloheptanol, tebuconazole, 2-(1-tert-butyl)-1-(2-chlorophenyl)-3-(1,2,4-triazol-1-yl)propan-2-ol, tetraconazole, triadimefon, triadimenol, triapenthenole, triflumizole, triticonazole, uniconazole and their metal salts and acid adducts and/or at least one benzimidazole from the group consisting of methyl benzimidazolylcarbamate, benomyl, fuberidazole, thiabendazole and their metal salts and acid adducts and/or at least one imidazole from the group consisting of imazolil, pefurazoate, prochloraz, triflumizole, bifonazole, Canesten®, fluotimazole, miconazole, econazole, isoconazole, sulconazole and their metal salts and acid adducts and/or at least one morpholine derivative from the group consisting of tridemorph, aldimorph, fenpropimorph, amorolfine and dodemorph with at least one phenolic compound from the group consisting of tribromophenol, tetrachlorophenol, nitrophenol, 3-methyl-4-chlorophenol, 3,5-dimethyl-4-chlorophenol, phenoxyethanol, dichlorophene, o-phenylphenol, m-phenylphenol, p-phenylphenol, 2-benzyl-4-chlorophenol and their alkali metal and alkaline earth metal salts and their mixtures in the production of leather for protecting animal hides against microbial infection, where the mixing ratios of the phenolic component to the other active compounds are from 5 to 200 parts by weight per part by weight.

2. Use according to Claim 1, **characterized in that** combinations of 3,5-dimethyl-4-chlorophenol, 2-benzyl-4-chlorophenol, p-chloro-m-cresol (CMC) and/or o-phenylphenol (OPP) are used as phenolic components and tebuconazole, propiconazole, azaconazole, hexaconazole, epoxyconazole, imazalil, methyl benzimidazolylcarbamate (MBC), benomyl, aldimorph and/or tridemorph as further components.

3. Use according to Claim 1, **characterized in that** combinations of p-chloro-m-cresol (CMC) and/or o-phenylphenol (OPP) with tebuconazole and/or propiconazole are employed.

4. Use according to Claim 1, **characterized in that** a mixture comprising p-chloro-m-cresol (CMC), o-phenylphenol (OPP) and tebuconazole is used.

5. Use according to Claim 1, **characterized in that** a combination of p-chloro-m-cresol (CMC) and/or o-phenylphenol (OPP) with methyl benzimidazolylcarbamate (MBC) is used.

6. Microbicidal compositions comprising a mixture as defined in one of Claims 1 to 5 and the components conventionally used for compositions for the protection of animal hides.

7. Method of protecting animal hides against microbial infection in leather production, **characterized in that** the hides are treated with a composition according to Claim 6.

8. Use of a mixture as defined in Claims 1 to 5 for the preparation of compositions for the protection of animal hides against microbial infection in leather production

## Revendications

1. Utilisation d'un mélange d'au moins un triazole du groupe formé par l'Amitrole, l'Azacyclotin, l'Azaconazole, l'Epoxiconazole (BAS 480F), le Bitertanole, le Cyproconazole, le Difenoconazole, le Fenbuconazole, le Fenchlorazole, le Fenethanol, le Fluquinconazole, le Flusilazole, le Flutriafol, l'Hexaconazole, l'Imibenconazole, l'Isozofos, le Myclobutanil, le Metconazole, l'Epoxyconazole, le Paclobutrazole, le Penconazole, le Propiconazole, le cis-1-(4-chlorophényl)-2-(1H-1,3,4-triazol-1-yl)cycloheptanol, le Tebuconazole, le 2-(1-tert-butyl)-1-(2-chlorophényl)-3-(1,2,4-triazol-1-yl)-propan-2-ol, Le Tetraconazole, le Triadimefon, le Triadimenol, le Triapenthenole, le Triflumizole, le Triticonazole, l'Uniconazole, de leurs sels métalliques et adducts d'acides et/ou d'au moins un benzimidazole du groupe consistant en le benzimidazolylcarbamate de méthyle, le Benomyl, le Fuberidazol, le Thiabendazol, de leurs sels métalliques et adducts d'acides, et/ou d'au moins un imidazole du groupe consistant en l'Imazolil, le Pefurazoate, le Prochloraz, le Triflumizole, le Bifonazole, le Canesten®, le Fluotimazole, le Miconazole, l'Econazole, l'Isoconazole, le Sulconazole, leurs sels métalliques et adducts d'acides et/ou d'au moins un dérivé de la morpholine du groupe consistant en le Tridemorph, l'Aldimorph, le Fenpropimorph, l'Amorolfine et le Dodemorph, avec au moins un composé phénolique du groupe consistant en le tribromophénol, le tétrachlorophénol, le nitrophénol, le 3-méthyl-4-chlorophénol, le 3,5-diméthyl-4-chlorophénol, le phénoxyéthanol, le Dichlorophen, l'o-phénylphénol, le m-phénylphénol, le p-phénylphénol, le 2-benzyl-4-chlorophénol, de leurs sels alcalins et alcalinoterreux et de leurs mélanges à la fabrication du cuir pour la protection des peaux animales contre l'attaque microbienne, les proportions relatives entre le constituant phénolique et les autres substances actives allant de 5 à 200 parties en poids pour 1 partie en poids.

2. Utilisation selon la revendication 1, **caractérisée en ce que** l'on utilise des combinaisons de 3,5-diméthyl-4-chlorophénol, le 2-benzyl-4-chlorophénol, de p-chloro-m-crésol (CMK) et/ou d'o-phénylphénol (OPP) en tant que constituants phénoliques et du Tebuconazole, du Propiconazole, de l'Azaconazole, de l'Hexaconazole, de l'Epoxyconazole, l'Imazalil, du benzimidazolylcarbamate de méthyle (BCM), du Benomyl, de l'Aldimorph et/ou du Tridemorph en tant qu'autre composant.

3. Utilisation selon la revendication 1, **caractérisée en ce que** l'on utilise des combinaisons du p-chloro-m-crésol (CMK) et/ou de l'o-phénylphénol (OPP) avec le Tebuconazole et/ou le Propiconazole.

4. Utilisation selon la revendication 1, **caractérisée en ce que** l'on utilise un mélange contenant du p-chloro-m-crésol (CMK), de l'o-phénylphénol (OPP) et du Tebuconazole.

5. Utilisation selon la revendication 1, **caractérisée en ce que** l'on utilise une combinaison de p-chloro-m-crésol (CMK) et/ou d'o-phényl-phénol (OPP) avec du benzimidazolylcarbamate de méthyle.

6. Produits microbicides contenant un mélange tel que défini dans l'une des revendications 1 à 5 et les constituants usuels des produits pour la protection des peaux animales.

7. Procédé pour protéger les peaux animales contre l'attaque microbienne à la fabrication du cuir, **caractérisé en ce que** l'on traite les peaux par un produit selon la revendication 6.

8. Utilisation d'un mélange tel que défini dans les revendications 1 à 5 pour la fabrication de produits pour la protection des peaux animales contre l'attaque microbienne à la fabrication du cuir.
